# EUROPEAN PATENT SPECIFICATION

(11) **EP 3 101 777 B1**
(45) Date of publication and mention of the grant of the patent: **03.01.2018**
(21) Application number: 15170653.8
(22) Date of filing: 04.06.2015
(51) Int. Cl.: H04W 8/00, H04W 8/24, H04W 84/18, H04L 12/28, H04B 5/00, H04W 4/00

(54) **COMMUNICATING OF FREQUENCY CONVERTER PARAMETERS**
KOMMUNIKATION VON FREQUENZUMRICHTERPARAMETERN
COMMUNICATION DE PARAMÈTRES DE CONVERTISSEUR DE FRÉQUENCE

(43) Date of publication of application: 07.12.2016
(73) Proprietor: ABB Technology Oy, 00380 Helsinki (FI)
(72) Inventor: Hu, Zhongliang, 00380 Helsinki (FI); Tanila, Teemu, 00380 Helsinki (FI); Kohvakka, Mikko, 00380 Helsinki (FI)
(74) Representative: Kolster Oy Ab

(56) References cited:
- WO-A1-2013/102908
- CN-U- 202 406 085
- US-A1- 2011 221 391

## Description

### TECHNICAL FIELD

The invention relates to communications, and particularly to communications between a frequency converter and a network apparatus.

### BACKGROUND

The following background description art may include insights, discoveries, understandings or disclosures, or associations together with disclosures not known to the relevant art prior to the present invention but provided by the present disclosure. Some such contributions disclosed herein may be specifically pointed out below, whereas other such contributions encompassed by the present disclosure the invention will be apparent from their context.

Frequency converters are used to change frequency and magnitude of electricity supplied to a load. Frequency converters are being used for example in alternating current (AC) motor drives. In exemplary operation, a frequency converter receives AC current from an electrical power supply and converts the frequency of the received AC current to another frequency after which the AC current is supplied to an AC electric motor. Also further parameters, for example, a voltage level of the received AC current may be changed. The AC motors are used in various applications including for example fans and pumps. In many applications the use of frequency converters may provide significant energy savings compared to supplying electrical power having a constant frequency.

To facilitate service and maintenance of the frequency converter, frequency controller settings may be managed by a user of a remote support tool at a service centre, wherein the frequency controller settings are communicated from the service centre via a communications network. Due to the remote location of the service centre, the user of the remote support tool is not necessarily aware of the actual status or operating phase of the frequency converter. For example, the frequency converter may be running a critical operating phase during which the settings of the frequency converter should not be altered.

US 2011/221 391 A1 discloses a method for wirelessly charging a mobile terminal. A server receives from the terminal a request to provide information regarding wireless power-supplying devices such as an electronic device, and generates a charger list containing the found electronic devices

CN202406085U discloses an automation device (frequency converter) which can be remote-controlled by a terminal device over a wireless communication network.

### BRIEF DESCRIPTION

The following presents a simplified summary of features disclosed herein to provide a basic understanding of some exemplary aspects of the invention. This summary is not an extensive overview of the invention. It is not intended to identify key/critical elements of the invention or to delineate the scope of the invention. Its sole purpose is to present some concepts disclosed herein in a simplified form as a prelude to a more detailed description.

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

Some embodiments provide a method, apparatus, system and a computer program product for communicating frequency converter parameters in a communications system, wherein the parameters are to be approved by a user of a local terminal device before they are communicated to the frequency converter.

### BRIEF DESCRIPTION OF DRAWINGS

In the following the invention will be described in greater detail by means of preferred embodiments with reference to the attached drawings, in which
Figure 1 illustrates a wireless communication system to which embodiments of the invention may be applied;
Figure 2 is a signalling diagram of a procedure for controlling a frequency converter according to an embodiment of the invention;
Figure 3 illustrates an exemplary user interface displayed on display of a local terminal device;
Figure 4 illustrates a blocks diagram of an apparatus according to an embodiment of the invention.

### DETAILED DESCRIPTION OF THE INVENTION

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

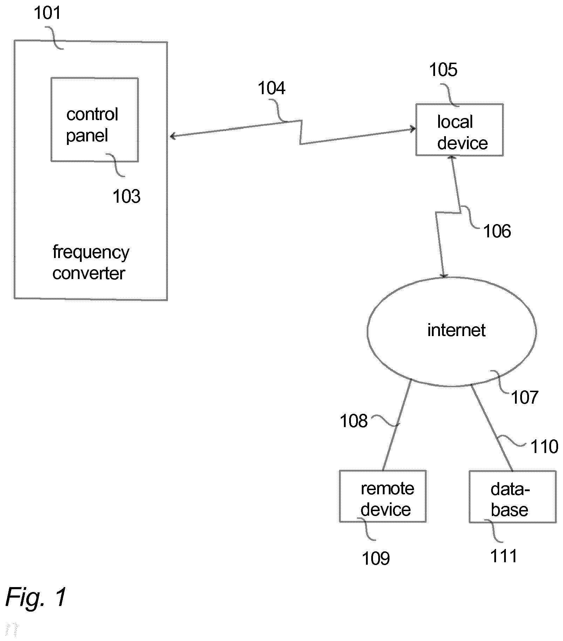

Figure 1 illustrates a wireless communication scenario to which embodiments of the invention may be applied. Referring to Figure 1, an example of a radio system to which embodiments of the invention may be applied, is based on LTE network elements. However, an embodiment is not limited to the LTE radio communications systems but may also be implemented in other radio communications systems, such as 3G, 4G, 5G, LTE-A, UMTS (universal mobile telecommunications system), EDGE, WCDMA, Bluetooth network, WLAN or any other mobile or wireless network. In an embodiment, the presented solution may be applied between user equipment belonging to different but compatible systems such as LTE and UMTS.

A general architecture of a communication system is illustrated in Figure 1. Figure 1 illustrates a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements, and protocols used in or for wireless communication are irrelevant to the actual invention. Therefore, they need not be discussed in more detail here.

Figure 1 illustrates a communication system according to an embodiment. Figure 1 illustrates an exemplary communications system in which a first user terminal 105 is able to connect to the internet 107 and to one or more frequency converters 101. The first user terminal 105 may be a local terminal device located on-site at a close proximity of the frequency converter 101. The local terminal device 105 may comprise a user equipment such as a smartphone, mobile phone, tablet computer or laptop computer. A connection 106 of the local terminal device 105 to the internet 107 may be provided by a cellular, wireless or wired link. A connection 104 of the local terminal device 105 to the frequency converter 101 may be provided e.g. by a Bluetooth, NFC, or inductive connection (such as an inductive connection according to an inductive power standard (Qi) by the Wireless Power Consortium).

A second user terminal 109 may be a remote terminal device located at a service center, for facilitating service and maintenance of the frequency converter 101. The remote terminal device 109 may facilitate different ways of how to communicate frequency converter parameters from the remote terminal device 109 to the frequency converter 101. The remote terminal device 109 may comprise e.g. a desktop computer, laptop computer, tablet computer, smartphone, mobile phone, etc. Any suitable technology that makes it possible to store frequency converter parameters into a service center database 111 may be utilized. For example, a cloud service (cloud computing) may be used via the internet 107 to store frequency converter parameters into the service center database 111.

In an embodiment, the local and remote terminal devices are capable of communicating with each other via the internet 107 by utilizing the cloud service. In an embodiment, the remote terminal device is configured to communicate the frequency converter parameters from the remote terminal device 109 to the local terminal device 105 for approval (instead of communicating them directly to the frequency converter). The frequency converter parameters are sent from the local terminal device to the frequency converter 101 via a communications link established between the local terminal device and the frequency converter only after the parameters have been reviewed and approved by the user of the local terminal device.

The frequency converter 101 comprises a control panel 103 capable of displaying a user interface of the frequency controller. A connection (not shown in Figure 1) between the frequency converter 101 and the control panel 103 may be provided by electrical conductors, for example, wires, cables and/or buses (such as RS-485). The control panel may be a fixed part of the frequency converter or a detachable control panel which may be connected to one or more frequency converters. The control panel 103 is used to control the functions of the frequency converter 101, for example, to start the frequency converter 101 or to turn off the frequency converter 101. The control panel 103 may also be used to define and manage parameters which the frequency converter 101 may store in a memory. The user may be offered, via a display and a user interface (a touchscreen and/or keyboard) on the control panel, a possibility to control the frequency converter 101, and/or to select specific parameters that the user wants to store in the memory. The selection made by the user is stored in the memory and taken into account when the frequency converter during operation or maintenance stores parameters into the memory.

In an embodiment, the local terminal device 105 may also be used to approve, review and manage parameters which the frequency converter 101 is to store in a memory. The user may be offered, via a user interface on the local terminal device, a possibility to select specific parameters that the user wants to store in the memory of the frequency converter. The selection made by the user is stored in the memory and taken into account during operation or maintenance of the frequency converter.

The inductive power transfer may be based on electromagnetic induction between the energy transfer means and the display. The electromagnetic induction causes an electric current in the display such that the display is powered by the induced current from the energy transfer means. Since the display is powered wirelessly from the frequency converter, the enclosure may be manufactured and designed without openings for power cables of the display. Since there are no openings for the power cables of the display, the enclosure meets many different IP ratings without needing to redesign the enclosure. In this way also the same enclosure may be manufactured and used in frequency converters to meet different IP ratings.

The energy transfer means capable of inductive power transfer to a display installed to the installation position may follow a principle of an inductively coupled power transfer including a transmitter transfer head, e.g. transmitter coil L1, in the energy transfer means and a receiver transfer head, e.g. a receiver coil L2, in the display. Both transfer heads form a system of magnetically coupled inductors. An alternating current in the transmitter transfer head generates a magnetic field which induces a voltage in the receiver transfer head. This voltage can be used to feed electrical power to the display.

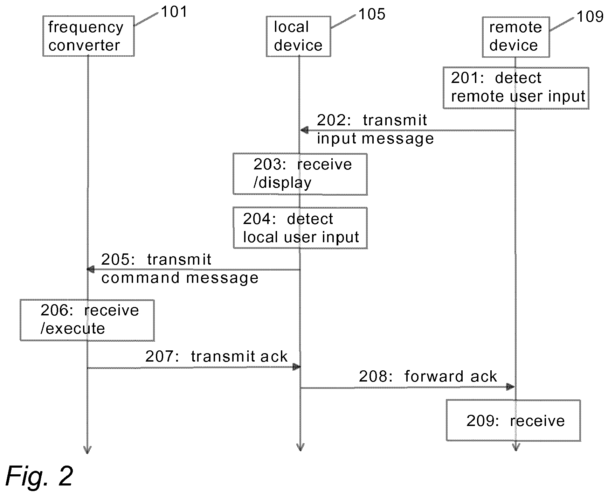

Let us now describe an embodiment of the invention with reference to Figure 2. Figure 2 is a signalling diagram illustrating a method for signalling frequency converter parameters between a frequency converter, and network nodes of a communication system e.g. a local terminal device 105 and a remote terminal device 109. The network node 105, 109 may be a terminal device, user equipment, host computer, server computer, base station, access node or any other network element. For example, the server computer or the host computer may generate a virtual network through which the host computer communicates with the terminal device.

Referring to Figure 2, the remote terminal device 109 is configured to detect (block 201) an input related to a specific frequency converter (or to a group of frequency converters) entered on the remote terminal device by a user of the remote terminal device. Based on the detecting, the remote terminal device 109 is configured to transmit (block 202) to a local terminal device 105 a set of instructions related to the frequency converter(s). The set of instructions may comprise instructions for uploading, sending and/or updating one or more of frequency converter parameters, frequency converter fault codes, frequency converter location information, frequency converter firmware information, image files, and user's manual information such as pdf documents commissioning instructions or video files. Examples of frequency converter parameters include output current, motor speed, frequency, torque and temperature. The set of instructions may be transmitted to the local terminal device via one or more network nodes, e.g. through a cellular network or a wireless local area network.

The local terminal device 105 is configured to receive (block 203) the set of instructions related to the frequency converter(s), and display (block 203) information on the received set of instructions on a display of the local terminal device. The local terminal device 105 is configured to detect (block 204) a user input entered by a user of the local terminal device /a predetermined act performed by a user of the local terminal device, and, in response to the detecting, cause (block 205) transmission of control data to the frequency converter(s), if the user input indicates that the user of the local terminal device approves the execution of the set of instructions in the frequency converter. Herein, the local terminal device 105 may be configured to display (block 203), on the display of the local terminal device, a user interface related to the frequency converter(s), and the user input may comprise the user of the local terminal device touching at least one element displayed on the user interface. Another option is that the local terminal device 105 is configured to display (block 203), on the display of the local terminal device, information related to the frequency converter(s), and the input may comprise the user of the local terminal device pressing an appropriate command button on the local terminal device. The control data 205 is to command the frequency converter(s) to execute the set of instructions in the frequency converter(s). The control data may be transmitted 205 directly from the local terminal device 105 to the frequency converter 101 via a communications link established between the local terminal device 105 and the frequency converter 101, e.g. via a Bluetooth connection, inductive connection, a wired connection, and/or by using near field communication (NFC). The local terminal device may also be configured to obtain and display local information on the frequency converter (e.g. a fault log, parameter settings, etc.), and prompt the local user to indicate whether or not the local user approves the local information.

The frequency converter 101 is configured to receive (block 206) the control data commanding the frequency converter to execute the set of instructions related to the frequency converter, and, in response to the receiving, execute (block 206) the set of instructions in the frequency converter 101. The frequency converter may be configured to acknowledge (block 207) the receipt/execution of the set of instructions, by transmitting an acknowledgement message to the local terminal device 105 (via the Bluetooth, inductive, NFC or wired connection).

The local terminal device 105 may be configured to transmit (block 208) an acknowledgement message the remote terminal device 109, if the user input indicates that the user of the local terminal device approves the execution of the set of instructions (message 208 may also be transmitted in response to receiving message 207 from the frequency converter). The local terminal device 105 may be configured to transmit a negative acknowledgement message to the remote terminal device, if the user input indicates that the user of the local terminal device rejects the execution of the set of instructions. One option is that the local terminal device 105 is configured to transmit a request message from to the remote terminal device, if the user input indicates that the user of the local terminal device rejects the execution of the set of instructions and/or requests further information on the set of instructions, the request message requesting further information relating to the set of instructions.

The remote terminal device may be configured to receive (block 209) the acknowledgement, negative acknowledgement or request message. Based on the request message, the remote terminal device may be configured to transmit further information related to the set of instructions and/or a modified set of instructions. This may be carried out automatically in the remote terminal device, or the remote terminal device may be configured to prompt the user of the remote terminal device to enter the further information and/or the modified set of instructions.

The local terminal device is configured to receive (not shown in Figure 2) the further information related to the set of instructions and/or the modified set of instructions, and in response to that, display a user interface indicating the further information (which the user may approve or reject as described above, before transmission to the frequency controller).

In an embodiment, the set of instructions may be modified (in block 204) in the local terminal device, in response to a respective modification input by the user of the local terminal device. In that case, the control data transmitted (block 205) to the frequency converter commands the frequency converter to execute the modified set of instructions.

The user of the local terminal device 105 may be a registered user of a frequency converter support application. An authentication procedure may be provided, requiring the user of the local terminal device to enter a specific authentication code on the local terminal device before allowing the local terminal device with access to the frequency converter support application loaded on the local terminal device.

The authentication procedure may require the local terminal device sending an authentication request to the remote terminal device, and receiving a positive authentication response from the cloud service.

The authentication procedure may also be carried out automatically between the local terminal device and the cloud service, e.g. in response to the user starting the frequency converter support application on the local terminal device.

Access rights and/or authentication codes regarding the frequency converter support application may be defined to be user-specific, terminal device specific, frequency converter specific, frequency converter group specific, site-specific etc.

Thus in an embodiment, the user of a remote terminal device may send, by means of the remote unit, information to a local terminal device regarding a frequency converter. The local device may be, for example, a mobile phone such as a smart phone operating on-site. The remote device may be, for example, a personal computer or other terminal device at a service center. A user of the local device may, based on the information received from the remote device, decide whether or not to accept the information sent from the remote device regarding the frequency converter and/or related devices or applications. The local device may comprise a user interface for receiving the acceptance and/or refusal of the user. Thus the user of the local device is able to control, for example, which settings made by the user of the remote device are taken into use in the frequency converter.

In an embodiment, the user of the local device, e.g. a customer or maintenance personnel, is able to establish a local connection with the frequency converter e.g. via Bluetooth, while also having a real-time communication connection with a support engineer that uses the remote device. The local user and the remote user may thus be engaged in a live diagnostic session by means of the frequency converter support application, e.g. a mobile application.

In an embodiment, the remote user is capable of receiving information on a frequency converter status. This may accomplished by sending a request message from the remote device to the local device. For example, information on various parameter sets, e.g. parameter groups, fault codes, location information and firmware versions may be requested and received in the remote device from the frequency converter via the local device. The user of the remote device may also send, via the local device, instructions sets to be executed locally in the frequency converter.

In an embodiment, the local user is able to verify and approve the instructions and executable scripts, for example, if the frequency converter is running a critical process which is not to be altered by executing erroneous instructions. Thus the local user is provided with an opportunity to review, reject and/or approve each individual instruction set/executable script sent by the remote user.

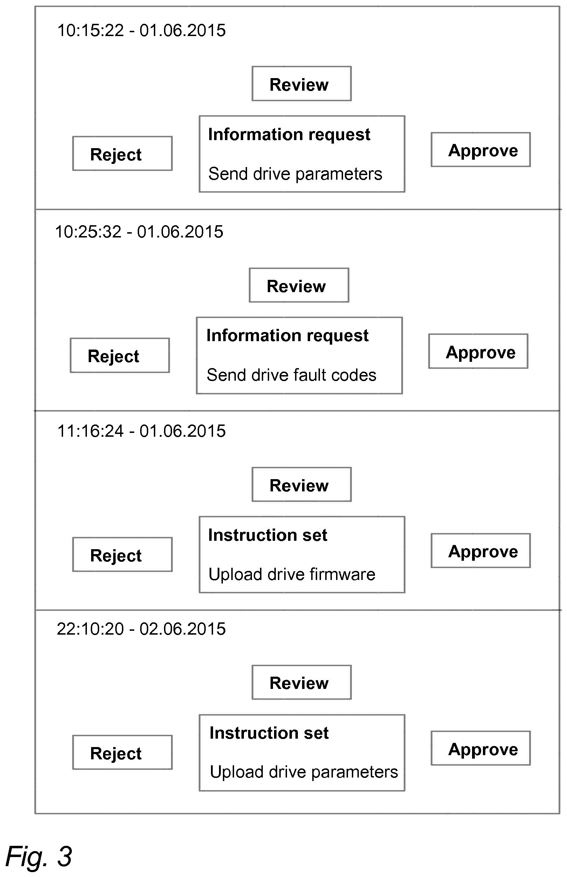

In an embodiment, communication and information flows between the local and remote device may be exchanged in a chronological order and visualized on a display of the local device. The exchanged information may comprise requests for information and instructions/scripts to be executed which are sent between the remote device and the local device. The user of the local device is given an option to review and to reject or approve each request. Each piece of information may be a collection of smaller tasks which may be examined by the local user by selecting a review option on the local device (see Figure 3).

Thus the local user is still able to control and change/modify the frequency converter settings/instructions (before sending them to the frequency converter for execution), even if the remote user has defined the settings and the instructions to be executed.

The user of the local device may be authenticated by the local device. For example, the local device may prompt the user to enter a predefined password and/or a user ID when a corresponding frequency converter control application is started on the local device. If the user fails to enter the correct password/user ID, the application is not started. This enables preventing an unauthorized access to the frequency converter settings.

An embodiment enables the local device directly to control the frequency converter settings, for example, if the control panel (or other user interface) of the frequency converter is missing for some reason.

In an embodiment, the control panel (or other user interface) may not be needed in the frequency converter. Instead, the frequency converter settings are controlled by the local mobile device. In that case, the same local device may be used for configuring the settings of one or more frequency converters.

In an embodiment, the frequency converter support application is implemented as a cloud service (cloud computing) via the internet. This may involve client-server computing implemented as a distributed network application including service providers (servers) and service requestors (clients).

As used herein, the term parameter may refer to any measured, setup or adjusted item/value relating to the frequency converter. Examples of such parameters include output current, motor speed, frequency, torque and temperature. Parameters may also be referred to as settings.

An embodiment relates to a drive system comprising a frequency converter as described above.

In an embodiment, the user interface of the frequency converter support application displayed on the local terminal device, may also be simultaneous displayed on a control panel display of the frequency converter. For example, the frequency converter may be configured to display an indicator on the display of the frequency converter, indicating that some sort of operation is ongoing (e.g. in case of a Bluetooth connection, a Bluetooth logo and/or some spinner).

In an embodiment, the local terminal device may be configured to communicate with a group frequency converters. The local terminal device may receive, from the remote device a set of instructions related to a group frequency converters. In that case, the user of the local device is able to select to which frequency converter(s) in the group the received set instructions are to be forwarded by the local device and which not.

In addition to a drive system/frequency converter, an embodiment may also be applicable to other automation devices such as AC/DC modules, DC/AC modules, programmable logic controllers, switches, motion controllers, motion drives, servo motors, soft starters, robotics, cars, heavy equipment, etc.

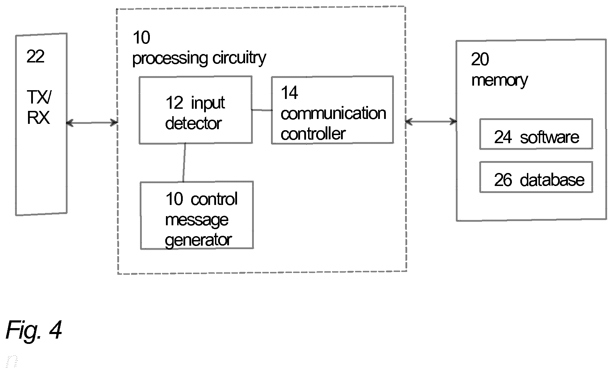

An embodiment provides an apparatus comprising at least one processor and at least one memory including a computer program code, wherein the at least one memory and the computer program code are configured, with the at least one processor, to cause the apparatus to carry out the procedures of the above-described (local) terminal device. The at least one processor, the at least one memory, and the computer program code may thus be considered as an embodiment of means for executing the above-described procedures of the terminal device. Figure 4 illustrates a block diagram of a structure of such an apparatus. The apparatus may be comprised in the terminal device, e.g. the apparatus may form a chipset or a circuitry in the terminal device. In some embodiments, the apparatus is the terminal device. The apparatus comprises a processing circuitry 10 comprising the at least one processor. The processing circuitry 10 may comprise a communications controller configured to receive and display a set of instructions related to a frequency converter and received from a remote terminal device via at least one network node. The processing circuitry 14 may further comprise an input detector 12 configured to detect a predetermined user input by a user of the local terminal device. The input detector 12 may be configured to detect the user input, and output information on the detection to a control message generator 10 configured to cause transmission of control data to the frequency converter via a communications link established between the local terminal device and the frequency converter, if the user input indicates that the user of the local terminal device approves the execution of the set of instructions in the frequency converter, the control data commanding the frequency converter to execute the set of instructions in the frequency converter..

The processing circuitry 10 may comprise the circuitries 10, 12, 14 as sub-circuitries, or they may be considered as computer program modules executed by the same physical processing circuitry. The memory 20 may store one or more computer program products 24 comprising program instructions that specify the operation of the circuitries 10, 12, 14. The memory 20 may further store a database 26 comprising definitions for frequency controller settings, for example. The apparatus may further comprise a radio interface 22 providing the apparatus with wireless communication capability with the network node. The radio interface may comprise a radio communication circuitry enabling wireless communications and comprise a radio frequency signal processing circuitry and a baseband signal processing circuitry. The baseband signal processing circuitry may be configured to carry out the functions of a transmitter and/or a receiver. In some embodiments, the radio interface may comprise a fixed communication circuitry enabling wired communications.

As used herein, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used herein, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described above in connection with Figures 1 to 4 may also be carried out in the form of one or more computer process defined by one or more computer programs. The computer program shall be considered to encompass also a module of a computer programs, e.g. the above-described processes may be carried out as a program module of a larger algorithm or a computer process. The computer program(s) may be in source code form, object code form, or in some intermediate form, and it may be stored in a carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The present invention is applicable to cellular or mobile communication systems defined above but also to other suitable communication systems. The protocols used, the specifications of cellular communication systems, their network elements, and terminal devices develop rapidly. Such development may require extra changes to the described embodiments. Therefore, all words and expressions should be interpreted broadly and they are intended to illustrate, not to restrict, the embodiment.

It will be obvious to a person skilled in the art that, as the technology advances, the inventive concept can be implemented in various ways. The invention and its embodiments are not limited to the examples described above but may vary within the scope of the claims.

## Claims

1. A method for signalling between a terminal device of a communication system and an automation device configured to receive electrical current from an electrical power supply, convert the frequency of the received electrical current to another frequency, and after that supply the electrical current to an electric motor, the method comprising
transmitting, from a remote terminal device to a local terminal device (109) via at least one network node of the communication system, a set of instructions related to the automation device;
receiving, in the local terminal device the set of instructions related to the automation device;
displaying, in the local terminal device, information on the received set of instructions on a display of the local terminal device;
detecting, in the local terminal device, a predetermined user input by a user of the local terminal device;
in response to the detecting, causing, in the local terminal device, transmission of control data to the automation device via a communications link established between the local terminal device and the automation device, if the user input indicates that the user of the local terminal device approves the execution of the set of instructions in the automation device, to command the automation device to execute the set of instructions;
receiving the control data in the automation device from the local terminal device; and
in response to the receiving, executing the set of instructions in the automation device.

2. A method of claim 1, wherein the method comprises
displaying, on the display of the local terminal device, a user interface related to the automation device, wherein the user input comprises the user of the local terminal device touching at least one corresponding element displayed on the user interface.

3. A method of claim 1 or 2, wherein the method comprises
displaying, on the display of the local terminal device, information related to the automation device, wherein the predetermined act comprises the user of the local terminal device pressing a respective command button on the local terminal device.

4. A method of claim 1, 2 or 3, wherein the method comprises
receiving, in the local terminal device, the set of instructions via at least one of a mobile network connection and a wireless local area network connection.

5. A method of any preceding claim, wherein the method comprises
transmitting the control data from the local terminal device to the the automation device via at least one of a Bluetooth connection, inductive connection, near field communication connection, and a wired connection.

6. A method of any preceding claim, wherein the method comprises
transmitting an acknowledgement message from the local terminal device to the remote terminal device, if the user input indicates that the user of the local terminal device approves the execution of the set of instructions.

7. A method of any preceding claim, wherein the method comprises
transmitting a negative acknowledgement message from the local terminal device to the remote terminal device, if the user input indicates that the user of the local terminal device rejects the execution of the set of instructions.

8. A method of any preceding claim, wherein the method comprises
transmitting a request message from the local terminal device to the remote terminal device, if the user input indicates that the user of the local terminal device rejects the execution of the set of instructions and/or requests further information on the set of instructions, the request message requesting further information relating to the set of instructions.

9. A method of any preceding claim, wherein the method comprises
transmitting from the local terminal device control data commanding the automation device to execute a modified set of instructions related to the automation device,
the set of instructions having been modified in the local terminal device in response to a respective modification input by the user of the local terminal device, or in the remote terminal device in response to a respective modification input by the user of the remote terminal device.

10. A method of any preceding claim, wherein the set of instructions related to the automation device comprises instructions for uploading, sending and/or updating one or more of automation device parameters, automation device fault codes, automation device location information and automation device firmware information, image files, and user manual information such as pdf documents commissioning instructions or video files.

11. A method for signalling between a terminal device of a communication system and an automation device configured to receive electrical current from an electrical power supply, convert the frequency of the received electrical current to another frequency, and after that supply the electrical current to an electric motor, the method comprising
receiving, in the automation device from the terminal device, control data commanding the automation device to execute a set of instructions related to the automation device, the control data having been transmitted directly via a communications link established between the terminal device and the automation device in response to detecting a predetermined user input by the user of the terminal device, the user input indicating that the user of the terminal device approves the execution of the set of instructions in the automation device;
in response to the receiving, executing, in the automation device, the set of instructions, wherein the set of instructions is related to the automation device and received in the terminal device from a remote device.

12. A method of claim 11, wherein the method comprises one or more of
receiving, in the automation device from the terminal device, the control data via a Bluetooth connection;
receiving, in the automation device from the terminal device, the control data via an inductive connection;
receiving, in the automation device from the terminal device, the control data by using near field communication; and
receiving, in the automation device from the terminal device, the control data via a wired connection.

13. A method of claim 11 or 12, wherein the set of instructions related to the automation device comprises instructions for uploading, sending and/or updating one or more of drive parameters, drive fault codes, drive location information and drive firmware information, image files, and user's manual information such as pdf documents commissioning instructions or video files.

14. An automation device (101) configured to receive electrical current from an electrical power supply, convert the frequency of the received electrical current to another frequency, and after that supply the electrical current to an electric motor, wherein the automation device comprises:
at least one processor; and
at least one memory including a computer program code, wherein the at least one memory and the computer program code are configured, with the at least one processor, to cause the automation device to
receive, from a terminal device of a communication system, control data commanding the automation device to execute a set of instructions related to the automation device, the control data having been transmitted directly via a communications link established between the terminal device and the automation device in response to detecting a predetermined user input by the user of the terminal device, the user input indicating that the user of the terminal device approves the execution of the set of instructions;
in response to the receiving, execute the set of instructions in the automation device, wherein the set of instructions is related to the automation device and received in the terminal device from a remote device.

15. An automation device of claim 14, wherein the at least one memory and the computer program code are configured, with the at least one processor, to cause the automation device to perform any of the method steps of claims 11 or 12.

16. A drive system comprising an automation device according to claim 14 or 15.

17. A communications system comprising
at least one terminal device of a communication system, and
an automation device configured to receive electrical current from an electrical power supply, convert the frequency of the received electrical current to another frequency, and after that supply the electrical current to an electric motor,
wherein the system is configured to
transmit, from a remote terminal device to a local terminal device (109) via at least one network node of the communication system a set of instructions related to the automation device;
receive, in a local terminal device, the set of instructions;
display, in the local terminal device, information on the received set of instructions on a display of the local terminal device;
detect, in the local terminal device, a predetermined user input by a user of the local terminal device;
in response to the detecting, cause, in the local terminal device, transmission of control data to the automation device via a communications link established between the local terminal device and the automation device, if the user input indicates that the user of the local terminal device approves the execution of the set of instructions in the automation device, the control data commanding the automation deviceto execute the set of instructions in the automation device;
receive the control data in the automation device from the terminal device;
in response to the receiving, execute the set of instructions in the automation device.

18. A computer program product embodied on a distribution medium readable by a computer and comprising program instructions which, when loaded into an apparatus, execute all the steps of the method according to any preceding claim 1 to 13.

19. A computer program product embodied on a non-transitory distribution medium readable by a computer and comprising program instructions which, when loaded into the computer, execute a computer process comprising
transmitting, from a remote terminal device to a local terminal device (109) via at least one network node of a communication system, a set of instructions related to an automation device;
receiving the set of instructions related to the automation devicein the local terminal device (105);
displaying information on the received set of instructions on a display of the local terminal device;
detecting a predetermined user input by a user of the local terminal device;
in response to the detecting, causing the local terminal device to transmit control data to the automation device via a communications link established between the terminal device and the automation device, if the user input indicates that the user of the local terminal device approves the execution of the set of instructions in the automation device, to command the automation device to execute the set of instructions;
receiving the control data in the automation device from the local terminal device; and
in response to the receiving, executing the set of instructions in the automation device;
wherein the automation device is configured to receive electrical current from an electrical power supply, convert the frequency of the received electrical current to another frequency, and after that supply the electrical current to an electric motor.

20. A computer program product embodied on a non-transitory distribution medium readable by a computer and comprising program instructions which, when loaded into the computer, execute a computer process comprising
receiving control data commanding a automation device to execute a set of instructions related to the automation device, the control data having been transmitted directly to the automation device from a terminal device of a communication system in response to detecting a predetermined user input by the user of the terminal device, the user input indicating that the user of the terminal device approves the execution of the set of instructions in the automation device;
in response to the receiving, causing the automation device to execute the set of instructions, wherein the set of instructions is related to the automation device and received in the terminal device from a remote device; wherein the automation device is configured to receive electrical current from an electrical power supply, convert the frequency of the received electrical current to another frequency, and after that supply the electrical current to an electric motor.

## Patentansprüche

1. Verfahren zur Zeichengabe zwischen einem Endgerät eines Kommunikationssystems und einem Automatisierungsgerät, das dazu konfiguriert ist, elektrischen Strom von einer elektrischen Energieversorgung zu erhalten, die Frequenz des erhaltenen elektrischen Stroms in eine andere Frequenz zu wandeln und anschließend den elektrischen Strom an einen Elektromotor zu liefern, wobei das Verfahren umfasst:
- Übertragen, von einem externen Endgerät zu einem lokalen Endgerät (109), über zumindest einen Netzknoten des Kommunikationssystems, eines Satzes von auf das Automatisierungsgerät bezogenen Instruktionen;
- Empfangen, in dem lokalen Endgerät, des Satzes von auf das Automatisierungsgerät bezogenen Instruktionen;
- Anzeigen, in dem lokalen Endgerät, einer Information über den empfangenen Satz von Instruktionen auf einem Display des lokalen Endgeräts;
- Detektieren, in dem lokalen Endgerät, einer vorbestimmten Benutzereingabe durch einen Benutzer des lokalen Endgeräts;
- ansprechend auf das Detektieren, Bewirken, in dem lokalen Endgerät, einer Übertragung von Steuerdaten zu dem Automatisierungsgerät über eine zwischen dem lokalen Endgerät und dem Automatisierungsgerät aufgebaute Kommunikationsverbindung, wenn die Benutzereingabe anzeigt, dass der Benutzer des lokalen Endgeräts der Ausführung des Satzes von Instruktionen in dem Automatisierungsgerät zustimmt, um das Automatisierungsgerät anzuweisen, den Satz von Instruktionen auszuführen;
- Empfangen der Steuerdaten in dem Automatisierungsgerät von dem lokalen Endgerät; und
- ansprechend auf das Empfangen, Ausführen des Satzes von Instruktionen in dem Automatisierungsgerät.

2. Verfahren nach Anspruch 1, wobei das Verfahren umfasst:
- Anzeigen, auf dem Display des lokalen Endgeräts, einer auf das Automatisierungsgerät bezogenen Benutzeroberfläche, wobei die Benutzereingabe umfasst, dass der Benutzer des lokalen Endgeräts zumindest ein entsprechendes Element, das auf der Benutzeroberfläche angezeigt wird, berührt.

3. Verfahren nach Anspruch 1 oder 2, wobei das Verfahren umfasst:
- Anzeigen, auf dem Display des lokalen Endgeräts, einer auf das Automatisierungsgerät bezogenen Information, wobei die vorbestimmte Handlung umfasst, dass der Benutzer des lokalen Endgeräts eine entsprechende Befehlsschaltfläche auf dem lokalen Endgerät drückt.

4. Verfahren nach Anspruch 1, 2 oder 3, wobei das Verfahren umfasst:
- Empfangen, in dem lokalen Endgerät, des Satzes von Instruktionen über zumindest eines von einer Mobilfunkverbindung und einer Verbindung eines drahtlosen lokalen Netzes.

5. Verfahren nach einem vorstehenden Anspruch, wobei das Verfahren umfasst:
- Übertragen der Steuerdaten von dem lokalen Endgerät zu dem Automatisierungsgerät über zumindest eines von einer Bluetooth-Verbindung, einer induktiven Verbindung, einer Nahfeldkommunikationsverbindung und einer Kabelverbindung.

6. Verfahren nach einem vorstehenden Anspruch, wobei das Verfahren umfasst:
- Übertragen einer Bestätigungsnachricht von dem lokalen Endgerät zu dem externen Endgerät, wenn die Benutzereingabe anzeigt, dass der Benutzer des lokalen Endgeräts der Ausführung des Satzes von Instruktionen zustimmt.

7. Verfahren nach einem vorstehenden Anspruch, wobei das Verfahren umfasst:
- Übertragen einer negativen Rückmeldungsnachricht von dem lokalen Endgerät zu dem externen Endgerät, wenn Benutzereingabe anzeigt, dass der Benutzer des lokalen Endgeräts die Ausführung des Satzes von Instruktionen ablehnt.

8. Verfahren nach einem vorstehenden Anspruch, wobei das Verfahren umfasst:
- Übertragen einer Anfragenachricht von dem lokalen Endgerät zu dem externen Endgerät, wenn die Benutzereingabe anzeigt, dass der Benutzer des lokalen Endgeräts die Ausführung des Satzes von Instruktionen ablehnt und/oder eine weitere Information über den Satz von Instruktionen anfordert, wobei die Anfragenachricht eine weitere auf den Satz von Instruktionen bezogene Information anfordert.

9. Verfahren nach einem vorstehenden Anspruch, wobei das Verfahren umfasst:
- Übertragen, von dem lokalen Endgerät, Steuerdaten, die das Automatisierungsgerät anweisen, einen modifizierten Satz von auf das Automatisierungsgerät bezogenen Instruktionen auszuführen,
- wobei der Satz von Instruktionen in dem lokalen Endgerät ansprechend auf eine entsprechende Modifizierungseingabe durch den Benutzer des lokalen Endgeräts oder in dem externen Endgerät ansprechend auf eine entsprechende Modifizierungseingabe durch den Benutzer des externen Endgeräts modifiziert worden ist.

10. Verfahren nach einem vorstehenden Anspruch, wobei der Satz von auf das Automatisierungsgerät bezogenen Instruktionen Instruktionen zum Hochladen, Senden und/oder Aktualisieren eines oder mehrerer von Automatisierungsgerät-Parametern, Automatisierungsgerät-Fehlercodes, Automatisierungsgerät-Ortsinformationen und Automatisierungsgerät-Firmwareinformationen, Bilddateien und Benutzerhandbuchinformationen wie beispielsweise PDF-Dokumente, die Instruktionen oder Videodateien autorisieren, umfasst.

11. Verfahren zur Zeichengabe zwischen einem Endgerät eines Kommunikationssystems und einem Automatisierungsgerät, das dazu konfiguriert ist, elektrischen Strom von einer elektrischen Energieversorgung zu erhalten, die Frequenz des erhaltenen elektrischen Stroms in eine andere Frequenz zu wandeln und anschließend den elektrischen Strom an einen Elektromotor zu liefern, wobei das Verfahren umfasst:
- Empfangen, in dem Automatisierungsgerät von dem Endgerät, von Steuerdaten, die das Automatisierungsgerät anweisen, einen Satz von auf das Automatisierungsgerät bezogenen Instruktionen auszuführen, wobei die Steuerdaten direkt über eine zwischen dem Endgerät und dem Automatisierungsgerät aufgebaute Kommunikationsverbindung übertragen werden, ansprechend auf ein Detektieren einer vorbestimmten Benutzereingabe durch den Benutzer des Endgeräts, wobei die Benutzereingabe anzeigt, dass der Benutzer des Endgeräts der Ausführung des Satzes von Instruktionen in dem Automatisierungsgerät zustimmt;
- ansprechend auf das Empfangen, Ausführen, in dem Automatisierungsgerät, des Satzes von Instruktionen, wobei der Satz von Instruktionen auf das Automatisierungsgerät bezogen ist und von einem externen Gerät in dem Endgerät empfangen wird.

12. Verfahren nach Anspruch 11, wobei das Verfahren eines oder mehrere der Folgenden umfasst:
- Empfangen der Steuerdaten in dem Automatisierungsgerät von dem Endgerät über eine Bluetooth-Verbindung;
- Empfangen der Steuerdaten in dem Automatisierungsgerät von dem Endgerät über eine induktive Verbindung;
- Empfangen der Steuerdaten in dem Automatisierungsgerät von dem Endgerät durch Verwenden einer Nahfeldkommunikation; und
- Empfangen der Steuerdaten in dem Automatisierungsgerät von dem Endgerät über eine Kabelverbindung.

13. Verfahren nach Anspruch 11 oder 12, wobei der Satz von auf das Automatisierungsgerät bezogenen Instruktionen Instruktionen zum Hochladen, Senden und/oder Aktualisieren eines oder mehrerer von Antriebsparametern, Antriebsfehlercodes, Antriebsortsinformationen und Antriebsfirmwareinformationen, Bilddateien und Benutzerhandbuchinformationen wie beispielsweise PDF-Dokumente, die Instruktionen oder Videodateien autorisieren, umfasst.

14. Automatisierungsgerät (101), das dazu konfiguriert ist, elektrischen Strom von einer elektrischen Energieversorgung zu erhalten, die Frequenz des erhaltenen elektrischen Stroms in eine andere Frequenz zu wandeln und anschließend den elektrischen Strom an einen Elektromotor zu liefern, wobei das Automatisierungsgerät umfasst:
- zumindest einen Prozessor; und
- zumindest einen Speicher, der einen Computerprogrammcode einschließt, wobei der zumindest eine Speicher und der Computerprogrammcode dazu konfiguriert sind, mit dem zumindest einen Prozessor zu bewirken, dass das Automatisierungsgerät
- von einem Endgerät eines Kommunikationssystems Steuerdaten empfängt, die das Automatisierungsgerät anweisen, einen Satz von auf das Automatisierungsgerät bezogenen Instruktionen auszuführen, wobei die Steuerdaten direkt über eine zwischen dem Endgerät und dem Automatisierungsgerät aufgebaute Kommunikationsverbindung übertragen worden sind, ansprechend auf ein Detektieren einer vorbestimmten Benutzereingabe durch den Benutzer des Endgeräts, wobei die Benutzereingabe anzeigt, dass der Benutzer des Endgeräts der Ausführung des Satzes von Instruktionen zustimmt;
- ansprechend auf das Empfangen den Satz von Instruktionen in dem Automatisierungsgerät ausführt, wobei der Satz von Instruktionen auf das Automatisierungsgerät bezogen ist und von einem externen Gerät in dem Endgerät empfangen wird.

15. Automatisierungsgerät nach Anspruch 14, wobei der zumindest eine Speicher und der Computerprogrammcode dazu konfiguriert sind, mit dem zumindest einen Prozessor zu bewirken, dass das Automatisierungsgerät einen der Verfahrensschritte nach Anspruch 11 oder 12 durchführt.

16. Antriebssystem, das ein Automatisierungsgerät nach Anspruch 14 oder 15 umfasst.

17. Kommunikationssystem, umfassend:
- zumindest ein Endgerät eines Kommunikationssystems, und
- ein Automatisierungsgerät, das dazu konfiguriert ist, elektrischen Strom von einer elektrischen Energieversorgung zu erhalten, die Frequenz des erhaltenen elektrischen Stroms in eine andere Frequenz zu wandeln und anschließend den elektrischen Strom an einen Elektromotor zu liefern,
- wobei das System dazu konfiguriert ist,
- über zumindest einen Netzknoten des Kommunikationssystems einen Satz von auf das Automatisierungsgerät bezogenen Instruktionen von einem externen Endgerät zu einem lokalen Endgerät (109) zu übertragen;
- in einem lokalen Endgerät den Satz von Instruktionen zu empfangen;
- in dem lokalen Endgerät eine Information über den empfangenen Satz von Instruktionen auf einem Display des lokalen Endgeräts anzuzeigen;
- in dem lokalen Endgerät eine vorbestimmte Benutzereingabe durch einen Benutzer des lokalen Endgeräts zu detektieren;
- ansprechend auf das Detektieren in dem lokalen Endgerät eine Übertragung von Steuerdaten über eine zwischen dem lokalen Endgerät und dem Automatisierungsgerät aufgebaute Kommunikationsverbindung an das Automatisierungsgerät zu bewirken, wenn die Benutzereingabe anzeigt, dass der Benutzer des lokalen Endgeräts der Ausführung des Satzes von Instruktionen in dem Automatisierungsgerät zustimmt, wobei die Steuerdaten das Automatisierungsgerät anweisen, den Satz von Instruktionen in dem Automatisierungsgerät auszuführen;
- die Steuerdaten in dem Automatisierungsgerät von dem Endgerät zu empfangen;
- ansprechend auf das Empfangen den Satz von Instruktionen in dem Automatisierungsgerät auszuführen.

18. Computerprogrammprodukt, das auf einem Vertriebsmedium ausgeführt ist, das durch einen Computer lesbar ist und Programminstruktionen umfasst, die, wenn sie in eine Vorrichtung geladen werden, alle Schritte des Verfahrens nach einem vorstehenden Anspruch 1 bis 13 ausführen.

19. Computerprogrammprodukt, das auf einem nicht-flüchtigen Vertriebsmedium ausgeführt ist, das durch einen Computer lesbar ist und Programminstruktionen umfasst, die, wenn sie in den Computer geladen werden, einen Computerprozess ausführen, der Folgende umfasst:
- Übertragen, von einem externen Endgerät zu einem lokalen Endgerät (109), über zumindest einen Netzknoten eines Kommunikationssystems, eines Satzes von auf ein Automatisierungsgerät bezogenen Instruktionen;
- Empfangen des Satzes von auf das Automatisierungsgerät bezogenen Instruktionen in dem lokalen Endgerät (105);
- Anzeigen einer Information über den empfangenen Satz von Instruktionen auf einem Display des lokalen Endgeräts;
- Detektieren einer vorbestimmten Benutzereingabe durch einen Benutzer des lokalen Endgeräts;
- ansprechend auf das Detektieren, Bewirken, dass das lokale Endgerät Steuerdaten über eine zwischen dem Endgerät und dem Automatisierungsgerät aufgebaute Kommunikationsverbindung an das Automatisierungsgerät überträgt, wenn die Benutzereingabe anzeigt, dass der Benutzer des lokalen Endgeräts der Ausführung des Satzes von Instruktionen in dem Automatisierungsgerät zustimmt, um das Automatisierungsgerät anzuweisen, den Satz von Instruktionen auszuführen;
- Empfangen der Steuerdaten in dem Automatisierungsgerät von dem lokalen Endgerät; und
- ansprechend auf das Empfangen, Ausführen des Satzes von Instruktionen in dem Automatisierungsgerät;
- wobei das Automatisierungsgerät dazu konfiguriert ist, elektrischen Strom von einer elektrischen Energieversorgung zu erhalten, die Frequenz des erhaltenen elektrischen Stroms in eine andere Frequenz zu wandeln und anschließend den elektrischen Strom an einen Elektromotor zu liefern.

20. Computerprogrammprodukt, das auf einem nicht-flüchtigen Vertriebsmedium ausgeführt ist, das durch einen Computer lesbar ist Programminstruktionen umfasst, die, wenn sie in den Computer geladen werden, einen Computerprozess ausführen, der Folgende umfasst:
- Empfangen von Steuerdaten, die ein Automatisierungsgerät anweisen, einen Satz von auf das Automatisierungsgerät bezogenen Instruktionen auszuführen, wobei die Steuerdaten von einem Endgerät eines Kommunikationssystems direkt zu dem Automatisierungsgerät übertragen werden, ansprechend auf ein Detektieren einer vorbestimmten Benutzereingabe durch den Benutzer des Endgeräts, wobei die Benutzereingabe anzeigt, dass der Benutzer des Endgeräts der Ausführung des Satzes von Instruktionen in dem Automatisierungsgerät zustimmt;
- ansprechend auf das Empfangen, Bewirken, dass das Automatisierungsgerät den Satz von Instruktionen ausführt, wobei der Satz von Instruktionen auf das Automatisierungsgerät bezogen ist und in dem Endgerät von einem externen Gerät empfangen wird;
- wobei das Automatisierungsgerät dazu konfiguriert ist, elektrischen Strom von einer elektrischen Energieversorgung zu erhalten, die Frequenz des erhaltenen elektrischen Stroms in eine andere Frequenz zu wandeln und anschließend den elektrischen Strom an einen Elektromotor zu liefern.

## Revendications

1. Procédé de signalisation entre un dispositif de terminal d'un système de communication et un dispositif d'automatisation configuré pour recevoir du courant électrique d'une alimentation électrique, convertir la fréquence du courant électrique reçu en une autre fréquence et, après cela, fournir le courant électrique à un moteur électrique, le procédé comprenant
la transmission, d'un dispositif de terminal distant à un dispositif de terminal local (109) via au moins un noeud de réseau du système de communication, d'un ensemble d'instructions se rapportant au dispositif d'automatisation ;
la réception, dans le dispositif de terminal local, de l'ensemble d'instructions se rapportant au dispositif d'automatisation ;
l'affichage, dans le dispositif de terminal local, d'informations sur l'ensemble d'instructions reçu sur une unité d'affichage du dispositif de terminal local ;
la détection, dans le dispositif de terminal local, d'une entrée d'utilisateur prédéterminée par un utilisateur du dispositif de terminal local ;
en réponse à la détection, le fait de provoquer, dans le dispositif de terminal local, une transmission de données de commande au dispositif d'automatisation via une liaison de communication établie entre le dispositif de terminal local et le dispositif d'automatisation, si l'entrée d'utilisateur indique que l'utilisateur du dispositif de terminal local approuve l'exécution de l'ensemble d'instructions dans le dispositif d'automatisation, pour ordonner au dispositif d'automatisation d'exécuter l'ensemble d'instructions ;
la réception des données de commande dans le dispositif d'automatisation en provenance du dispositif de terminal local ; et
en réponse à la réception, l'exécution de l'ensemble d'instructions dans le dispositif d'automatisation.

2. Procédé selon la revendication 1, dans lequel le procédé comprend
l'affichage, sur l'unité d'affichage du dispositif de terminal local, d'une interface utilisateur se rapportant au dispositif d'automatisation, dans lequel l'entrée d'utilisateur comprend le fait que l'utilisateur du dispositif de terminal local touche au moins un élément correspondant affiché sur l'interface utilisateur.

3. Procédé selon la revendication 1 ou 2, dans lequel le procédé comprend
l'affichage, sur l'unité d'affichage du dispositif de terminal local, d'informations se rapportant au dispositif d'automatisation, dans lequel l'acte prédéterminé comprend le fait que l'utilisateur du dispositif de terminal local appuie sur un bouton de commande respectif sur le dispositif de terminal local.

4. Procédé selon la revendication 1, 2 ou 3, dans lequel le procédé comprend
la réception, dans le dispositif de terminal local, de l'ensemble d'instructions via au moins une d'une connexion de réseau mobile et d'une connexion de réseau local sans fil.

5. Procédé selon l'une quelconque des revendications précédentes, dans lequel le procédé comprend
la transmission des données de commande du dispositif de terminal local au dispositif d'automatisation via au moins une d'une connexion Bluetooth, d'une connexion par induction, d'une connexion de communication en champ proche et d'une connexion par fil.

6. Procédé selon l'une quelconque des revendications précédentes, dans lequel le procédé comprend
la transmission d'un message d'accusé de réception du dispositif de terminal local au dispositif de terminal distant, si l'entrée d'utilisateur indique que l'utilisateur du dispositif de terminal local approuve l'exécution de l'ensemble d'instructions.

7. Procédé selon l'une quelconque des revendications précédentes, dans lequel le procédé comprend
la transmission d'un message d'accusé de réception négatif du dispositif de terminal local au dispositif de terminal distant, si l'entrée d'utilisateur indique que l'utilisateur du dispositif de terminal local rejette l'exécution de l'ensemble d'instructions.

8. Procédé selon l'une quelconque des revendications précédentes, dans lequel le procédé comprend
la transmission d'un message de demande du dispositif de terminal local au dispositif de terminal distant, si l'entrée d'utilisateur indique que l'utilisateur du dispositif de terminal local rejette l'exécution de l'ensemble d'instructions et/ou demande d'autres informations sur l'ensemble d'instructions, le message de demande demandant d'autres informations se rapportant à l'ensemble d'instructions.

9. Procédé selon l'une quelconque des revendications précédentes, dans lequel le procédé comprend
la transmission à partir du dispositif de terminal local de données de commande ordonnant au dispositif d'automatisation d'exécuter un ensemble d'instructions modifié se rapportant au dispositif d'automatisation,
l'ensemble d'instructions ayant été modifié dans le dispositif de terminal local en réponse à une entrée de modification respective par l'utilisateur du dispositif de terminal local, ou dans le dispositif de terminal distant en réponse à une entrée de modification respective par l'utilisateur du dispositif de terminal distant.

10. Procédé selon l'une quelconque des revendications précédentes, dans lequel l'ensemble d'instructions se rapportant au dispositif d'automatisation comprend des instructions pour télécharger, envoyer et/ou mettre à jour un ou plusieurs de paramètres de dispositif d'automatisation, de codes de défaillance de dispositif d'automatisation, d'informations d'emplacement de dispositif d'automatisation et d'informations de microprogramme de dispositif d'automatisation, de fichiers d'image et d'informations de manuel de l'utilisateur tels que des documents pdf mettant en service des instructions ou des fichiers vidéo.

11. Procédé de signalisation entre un dispositif de terminal d'un système de communication et un dispositif d'automatisation configuré pour recevoir du courant électrique d'une alimentation électrique, convertir la fréquence du courant électrique reçu en une autre fréquence et, après cela, fournir le courant électrique à un moteur électrique, le procédé comprenant
la réception, dans le dispositif d'automatisation en provenance du dispositif de terminal, de données de commande ordonnant au dispositif d'automatisation d'exécuter un ensemble d'instructions se rapportant au dispositif d'automatisation, les données de commande ayant été transmises directement via une liaison de communication établie entre le dispositif de terminal et le dispositif d'automatisation en réponse à la détection d'une entrée d'utilisateur prédéterminée par l'utilisateur du dispositif de terminal, l'entrée d'utilisateur indiquant que l'utilisateur du dispositif de terminal approuve l'exécution de l'ensemble d'instructions dans le dispositif d'automatisation ;
en réponse à la réception, l'exécution, dans le dispositif d'automatisation, de l'ensemble d'instructions, dans lequel l'ensemble d'instructions se rapporte au dispositif d'automatisation et est reçu dans le dispositif de terminal en provenance d'un dispositif distant.

12. Procédé selon la revendication 11, dans lequel le procédé comprend une ou plusieurs de
la réception, dans le dispositif d'automatisation en provenance du dispositif de terminal, des données de commande via une connexion Bluetooth ;
la réception, dans le dispositif d'automatisation en provenance du dispositif de terminal, des données de commande via une connexion par induction ;
la réception, dans le dispositif d'automatisation en provenance du dispositif de terminal, des données de commande à l'aide d'une communication en champ proche ; et
la réception, dans le dispositif d'automatisation en provenance du dispositif de terminal, des données de commande via une connexion par fil.

13. Procédé selon la revendication 11 ou 12, dans lequel l'ensemble d'instructions se rapportant au dispositif d'automatisation comprend des instructions pour télécharger, envoyer et/ou mettre à jour un ou plusieurs de paramètres d'entraînement, de codes de défaillance d'entraînement, d'informations d'emplacement d'entraînement et d'informations de microprogramme d'entraînement, de fichiers d'image et d'informations de manuel de l'utilisateur tels que des documents pdf mettant en service des instructions ou des fichiers vidéo.

14. Dispositif d'automatisation (101) configuré pour recevoir du courant électrique en provenance d'une alimentation électrique, convertir la fréquence du courant électrique reçu en une autre fréquence et, après cela, fournir le courant électrique à un moteur électrique, dans lequel le dispositif d'automatisation comprend :
au moins un processeur ; et
au moins une mémoire incluant un code de programme d'ordinateur, dans lequel l'au moins une mémoire et le code de programme d'ordinateur sont configurés, avec l'au moins un processeur, pour amener le dispositif d'automatisation à
recevoir, d'un dispositif de terminal d'un système de communication, des données de commande ordonnant au dispositif d'automatisation d'exécuter un ensemble d'instructions se rapportant au dispositif d'automatisation, les données de commande ayant été transmises directement via une liaison de communication établie entre le dispositif de terminal et le dispositif d'automatisation en réponse à la détection d'une entrée d'utilisateur prédéterminée par l'utilisateur du dispositif de terminal, l'entrée d'utilisateur indiquant que l'utilisateur du dispositif de terminal approuve l'exécution de l'ensemble d'instructions ;
en réponse à la réception, exécuter l'ensemble d'instructions dans le dispositif d'automatisation, dans lequel l'ensemble d'instructions se rapporte au dispositif d'automatisation et est reçu dans le dispositif de terminal en provenance d'un dispositif distant.

15. Dispositif d'automatisation selon la revendication 14, dans lequel l'au moins une mémoire et le code de programme d'ordinateur sont configurés, avec l'au moins un processeur, pour amener le dispositif d'automatisation à effectuer l'une quelconque des étapes de procédé des revendications 11 ou 12.

16. Système d'entraînement comprenant un dispositif d'automatisation selon la revendication 14 ou 15.

17. Système de communication comprenant
au moins un dispositif de terminal d'un système de communication, et
un dispositif d'automatisation configuré pour recevoir du courant électrique d'une alimentation électrique, convertir la fréquence du courant électrique reçu en une autre fréquence et, après cela, fournir le courant électrique à un moteur électrique,
dans lequel le système est configuré pour
transmettre, d'un dispositif de terminal distant à un dispositif de terminal local (109) via au moins un noeud de réseau du système de communication un ensemble d'instructions se rapportant au dispositif d'automatisation ;
recevoir, dans un dispositif de terminal local, l'ensemble d'instructions ;
afficher, dans le dispositif de terminal local, des informations sur l'ensemble d'instructions reçu sur une unité d'affichage du dispositif de terminal local ;
détecter, dans le dispositif de terminal local, une entrée d'utilisateur prédéterminée par un utilisateur du dispositif de terminal local ;
en réponse à la détection, provoquer, dans le dispositif de terminal local, une transmission de données de commande au dispositif d'automatisation via une liaison de communication établie entre le dispositif de terminal local et le dispositif d'automatisation, si l'entrée d'utilisateur indique que l'utilisateur du dispositif de terminal local approuve l'exécution de l'ensemble d'instructions dans le dispositif d'automatisation, les données de commande ordonnant au dispositif d'automatisation d'exécuter l'ensemble d'instructions dans le dispositif d'automatisation ;
recevoir les données de commande dans le dispositif d'automatisation en provenance du dispositif de terminal ;
en réponse à la réception, exécuter l'ensemble d'instructions dans le dispositif d'automatisation.

18. Produit-programme d'ordinateur réalisé sur un support de distribution lisible par un ordinateur et comprenant des instructions de programme qui, lorsqu'elles sont chargées dans un appareil, exécutent toutes les étapes du procédé selon l'une quelconque des revendications précédentes 1 à 13.

19. Produit-programme d'ordinateur réalisé sur un support de distribution non transitoire lisible par un ordinateur et comprenant des instructions de programme qui, lorsqu'elles sont chargées dans l'ordinateur, exécutent un processus d'ordinateur comprenant
la transmission, d'un dispositif de terminal distant à un dispositif de terminal local (109) via au moins un noeud de réseau d'un système de communication, d'un ensemble d'instructions se rapportant à un dispositif d'automatisation ;
la réception de l'ensemble d'instructions se rapportant au dispositif d'automatisation dans le dispositif de terminal local (105) ;
l'affichage d'informations sur l'ensemble d'instructions reçu sur une unité d'affichage du dispositif de terminal local ;
la détection d'une entrée d'utilisateur prédéterminée par un utilisateur du dispositif de terminal local ;
en réponse à la détection, le fait d'amener le dispositif de terminal local à transmettre des données de commande au dispositif d'automatisation via une liaison de communication établie entre le dispositif de terminal et le dispositif d'automatisation, si l'entrée d'utilisateur indique que l'utilisateur du dispositif de terminal local approuve l'exécution de l'ensemble d'instructions dans le dispositif d'automatisation, pour ordonner au dispositif d'automatisation d'exécuter l'ensemble d'instructions ;
la réception des données de commande dans le dispositif d'automatisation en provenance du dispositif de terminal local ; et
en réponse à la réception, l'exécution de l'ensemble d'instructions dans le dispositif d'automatisation ;
dans lequel le dispositif d'automatisation est configuré pour recevoir un courant électrique d'une alimentation électrique, convertir la fréquence du courant électrique reçu en une autre fréquence et, après cela, fournir le courant électrique à un moteur électrique.

20. Produit-programme d'ordinateur réalisé sur un support de distribution non transitoire lisible par un ordinateur et comprenant des instructions de programme qui, lorsqu'elles sont chargées dans l'ordinateur, exécutent un processus d'ordinateur comprenant
la réception de données de commande ordonnant à un dispositif d'automatisation d'exécuter un ensemble d'instructions se rapportant au dispositif d'automatisation, les données de commande ayant été transmises directement au dispositif d'automatisation à partir d'un dispositif de terminal d'un système de communication en réponse à la détection d'une entrée d'utilisateur prédéterminée par l'utilisateur du dispositif de terminal, l'entrée d'utilisateur indiquant que l'utilisateur du dispositif de terminal approuve l'exécution de l'ensemble d'instructions dans le dispositif d'automatisation ;
en réponse à la réception, le fait d'amener le dispositif d'automatisation à exécuter l'ensemble d'instructions, dans lequel l'ensemble d'instructions se rapporte au dispositif d'automatisation et est reçu dans le dispositif de terminal en provenance d'un dispositif distant ;
dans lequel le dispositif d'automatisation est configuré pour recevoir un courant électrique d'une alimentation électrique, convertir la fréquence du courant électrique reçu en une autre fréquence et, après cela, fournir le courant électrique à un moteur électrique.
